# FASCICULE DE BREVET EUROPEEN

(11) **EP 1 457 027 B1**
(45) Date de publication et mention de la délivrance du brevet: **04.01.2006**
(21) Numéro de dépôt: 02791899.4
(22) Date de dépôt: 28.10.2002
(51) Int. Cl.: H04M 3/42, H04M 3/436, H04M 1/00

(54) **PROCEDE ET SYSTEME POUR LA FOURNITURE D'UN SERVICE DE REPERTOIRE INTELLIGENT**
VERFAHREN UND SYSTEM ZUR BEREITSTELLUNG EINES VERZEICHNISDIENTES
METHOD AND SYSTEM FOR PROVIDING AN INTELLIGENT DIRECTORY SERVICE

(30) Priorité: 21.12.2001 FR 0116749
(43) Date de publication de la demande: 15.09.2004
(73) Titulaire: FRANCE TELECOM, 75015 Paris (FR)
(72) Inventeur: BURY, Emmanuel, F-14130 Pont l'Evêque (FR); KERDRAON, Alan, F-14000 Caen (FR); REBILLON, Jacques-Olivier, F-14000 Caen (FR); LOISEL, Mélaine, F-14790 Verson (FR)
(74) Mandataire: de Roquemaurel, Bruno
(86) Numéro de dépôt international: PCT/FR2002/003694
(87) Numéro de publication internationale: WO 2003/056795

(56) Documents cités:
- EP-A- 1 225 752
- US-A- 4 932 050
- US-A- 5 764 747
- US-A1- 2001 024 951
- US-A1- 2002 078 150

## Description

La présente invention concerne le domaine de la téléphonie et en particulier un service de répertoire ou de carnet d'adresse offert aux utilisateurs d'un réseau de téléphonie mobile.

La plupart des terminaux de téléphonie mobile disposent d'une fonction de répertoire permettant de mémoriser un ensemble de numéros d'appel de correspondants associés à une information d'identification respective, cette fonction étant associée à des fonctions de saisie et de mise à jour des informations mémorisées dans le répertoire, ainsi que des fonctions de consultation, de sélection d'un correspondant à appeler et d'appel d'un correspondant ainsi sélectionné.

Actuellement, il n'est pas possible de savoir si un correspondant déterminé est joignable avant d'effectuer une tentative d'appel. Pour fournir une telle information, on a proposé dans la demande de brevet WO 01/72069 d'afficher, en association avec chaque entrée de correspondant d'un répertoire intégré dans un téléphone mobile, l'état joignable, non joignable, occupé, ou renvoyé, du téléphone du correspondant, selon que ce téléphone est accessible ou non par le réseau, est déjà en communication ou non, ou a activé une fonction de renvoi d'appel vers un autre terminal.

Toutefois, ces informations concernent uniquement l'état du terminal et ne tiennent pas compte de la disponibilité réelle du correspondant pour recevoir un appel de telle ou telle personne.

En outre, si un correspondant recherché dispose de plusieurs terminaux de communication (téléphone fixe personnel et au bureau, téléphone mobile), aucun système existant ne prévoit de fournir une information globale, indépendante d'un terminal particulier, sur l'état de joignabilité d'un correspondant.

Le document US 6 023 503 décrit un système de filtrage permettant de filtrer les appels destinés à un utilisateur sur la base des signaux d'appel (identité de l'appelant) et de la localisation de l'utilisateur (bureau, domicile, maison de week end, ...).

Par ailleurs, le document US 4 932 050 divulgue un dispositif permettant de détecter si un utilisateur se trouve ou non à proximité de son téléphone fixe et pour transmettre cette information vers un système de commutation

La présente invention a pour but de supprimer ces inconvénients. Cet objectif est atteint par la prévision d'un procédé pour la fourniture d'un service de répertoire à un utilisateur dans un système de télécommunication comprenant au moins un réseau de télécommunication ou de transmission de données numériques, chaque utilisateur étant équipé d'au moins un terminal de télécommunication susceptible d'être connecté à l'un des réseaux et muni d'une fonction de répertoire. Selon l'invention, ce procédé comprend les étapes consistant à :
- introduire dans une base de données un profil d'utilisateur pour chaque utilisateur enregistré, comprenant un répertoire et des données d'agenda et/ou de filtrage définissant des plages horaires de disponibilité associées chacune à au moins une liste de correspondants autorisés ou non à appeler l'utilisateur durant la plage horaire,
- déterminer et maintenir à jour dans chaque répertoire de la base de données un état d'accessibilité de chaque terminal d'utilisateur enregistré figurant dans le répertoire, selon que l'utilisateur enregistré est accessible ou non par un réseau par l'intermédiaire du terminal,
- déterminer et maintenir à jour dans chaque répertoire de la base de données un état de disponibilité de chaque correspondant enregistré figurant dans le répertoire, en fonction de l'heure courante, de l'identité de l'utilisateur à qui appartient le répertoire, de l'agenda du correspondant et d'informations de filtrage associées à cet agenda,
- émettre à chaque mise à jour du répertoire d'un utilisateur enregistré, un message de mise à jour au terminal d'utilisateur où est stocké le répertoire correspondant, et
- à la réception d'un message de mise à jour de répertoire par un terminal d'utilisateur enregistré, mettre à jour un état d'accessibilité et de disponibilité associé à chaque correspondant figurant dans le répertoire en fonction des informations contenues dans le message reçu.

Selon une particularité de l'invention, ce procédé comprend en outre des étapes consistant pour chaque terminal d'utilisateur enregistré à émettre des messages d'accessibilité contenant l'état d'accessibilité du terminal à chaque fois que le terminal se connecte et se déconnecte du réseau.

Avantageusement, chaque correspondant dans un répertoire de la base de données ou mémorisé dans un terminal d'utilisateur enregistré est associé à un état d'accessibilité et de disponibilité pouvant prendre l'une des valeurs suivantes :
- disponible lorsque le terminal du correspondant est à l'état accessible et que le correspondant est disponible pour recevoir un appel de l'utilisateur,
- non disponible lorsque le terminal du correspondant est à l'état accessible mais que le correspondant n'est pas disponible pour recevoir un appel de l'utilisateur,
- en ligne ou occupé lorsque le terminal du correspondant est en cours de communication,
- non connecté lorsque le terminal du correspondant n'est pas connecté, et
- inconnu, lorsque le correspondant n'est pas enregistré auprès du centre de coordination de services 1.

Selon une autre particularité de l'invention, ce procédé comprend une étape de signalement sur le terminal d'un utilisateur enregistré de la réception d'un message de mise à jour de répertoire.

De préférence, chaque profil d'utilisateur mémorisé dans la base de données comprend une zone dans laquelle l'utilisateur peut spécifier une liste de correspondants à qui l'état d'accessibilité et de disponibilité de l'utilisateur peut ou ne doit pas être communiqué, l'état d'accessibilité et de disponibilité d'un correspondant ne souhaitant pas communiquer son état de disponibilité prenant la valeur "inconnu".

Selon encore une autre particularité de l'invention, les utilisateurs enregistrés peuvent introduire dans leur profil plusieurs numéros ou adresses d'accès de terminaux par lesquels ils peuvent être joignables, un utilisateur enregistré étant considéré accessible dans les répertoires de la base de données où il apparaît, si au moins un terminal spécifié dans le profil de l'utilisateur est accessible.

La présente invention concerne également un système pour la fourniture d'un service de répertoire à un utilisateur dans un système de télécommunication comprenant au moins un réseau de télécommunication ou de transmission de données numériques, chaque utilisateur étant équipé d'au moins un terminal de télécommunication susceptible d'être connecté à l'un des réseaux et muni d'une fonction de répertoire Selon l'invention, ce système comprend :
- une base de données de profils d'utilisateurs enregistrés, comprenant pour chaque utilisateur un répertoire et des données d'agenda et/ou de filtrage définissant des plages horaires de disponibilité associées chacune à au moins une liste de correspondants autorisés ou non à appeler l'utilisateur durant la plage horaire,
- des moyens pour déterminer et maintenir à jour dans chaque répertoire de la base de données un état d'accessibilité de chaque terminal d'utilisateur enregistré figurant dans le répertoire, selon que l'utilisateur enregistré est accessible ou non par un réseau par l'intermédiaire du terminal,
- des moyens pour déterminer et maintenir à jour dans chaque répertoire de la base de données un état de disponibilité de chaque correspondant enregistré figurant dans le répertoire, en fonction de l'heure courante, de l'identité de l'utilisateur à qui appartient le répertoire, de l'agenda du correspondant et d'informations de filtrage associées à cet agenda,
- des moyens pour émettre par le réseau à chaque mise à jour du répertoire d'un utilisateur enregistré, un message de mise à jour au terminal d'utilisateur où est stocké le répertoire correspondant, et
- sur chaque terminal d'utilisateur enregistré, des moyens de réception pour recevoir des messages de mise à jour de répertoire, et des moyens pour mettre à jour un état d'accessibilité et de disponibilité associé à chaque correspondant figurant dans le répertoire en fonction des informations contenues dans le message reçu.

Avantageusement, chaque terminal d'utilisateur enregistré est associé à des moyens pour émettre un message d'accessibilité vers les moyens de mise à jour de l'état d'accessibilité de chaque utilisateur, à chaque fois que l'utilisateur passe d'un état dans lequel il se trouve en mesure de recevoir des appels par le terminal, vers un état dans lequel il ne se trouve plus en mesure de recevoir des appels par le terminal, et inversement.

De préférence, dans le cas où le terminal de l'utilisateur enregistré est un téléphone fixe, il comprend des moyens pour détecter la présence ou l'absence de l'utilisateur à proximité du téléphone fixe, et des moyens pour transmettre vers les moyens de mise à jour de l'état d'accessibilité de l'utilisateur, un message d'accessibilité du téléphone fixe à chaque changement d'état de présence de l'utilisateur à proximité du téléphone fixe.

De préférence, dans le cas où le terminal de l'utilisateur est un téléphone mobile, il comprend un programme qui est chargé dans la mémoire du téléphone mobile et qui est exécuté à la mise sous tension du téléphone mobile si celui-ci se trouve dans une zone couverte par un réseau de téléphonie cellulaire correspondant, ou à la mise hors tension du téléphone mobile, pour déclencher l'émission vers les moyens de mise à jour de l'état d'accessibilité de l'utilisateur, d'un message d'accessibilité du téléphone mobile pour déclarer celui-ci respectivement accessible, ou non accessible.

De préférence, dans le cas où le terminal de l'utilisateur est un terminal muni de moyens de traitement de données et connecté à un réseau terrestre, il comprend un programme qui est chargé dans la mémoire du terminal et qui est exécuté à la mise sous tension du terminal, ou à la mise hors tension du terminal, pour déclencher l'émission vers les moyens de mise à jour de l'état d'accessibilité de l'utilisateur, d'un message d'accessibilité du terminal pour déclarer celui-ci respectivement accessible, ou non accessible.

Selon une particularité de l'invention, chaque profil d'utilisateur dans la base de données comprend une zone mémoire dans laquelle les utilisateurs enregistrés peuvent introduire plusieurs numéros ou adresses d'accès de terminaux par lesquels ils peuvent être joignables, un utilisateur enregistré étant considéré accessible dans les répertoires de la base de données où il apparaît, si au moins un terminal spécifié dans le profil de l'utilisateur est accessible.

Un mode de réalisation préféré de l'invention sera décrit ci-après, à titre d'exemple non limitatif, avec référence aux dessins annexés dans lesquels
La figure 1 représente schématiquement un système selon l'invention ;
La figure 2 représente schématiquement un serveur de coordination de services mis en oeuvre par le système représenté sur la figure 1.

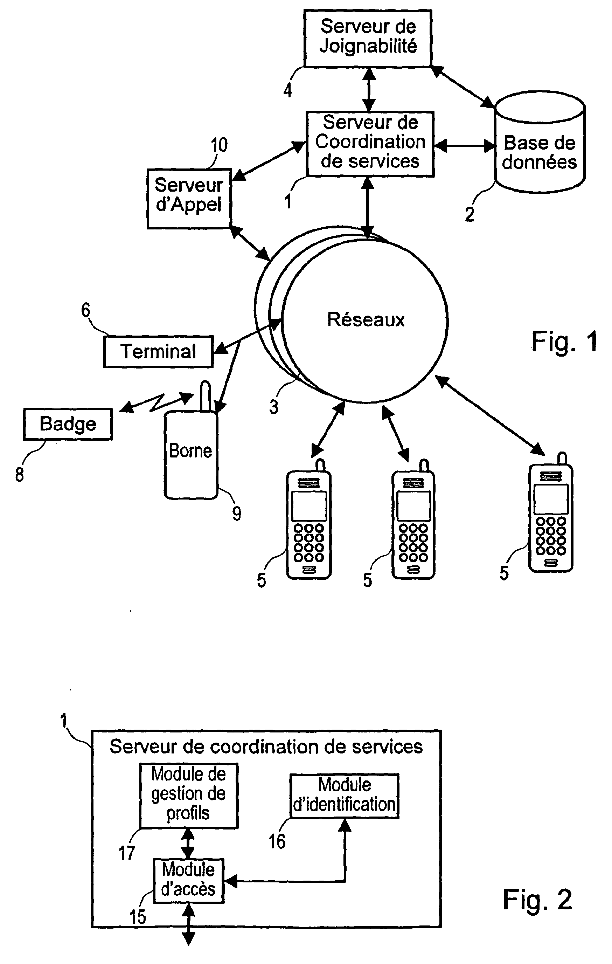

Le système représenté sur la figure 1 comprend un serveur de coordination de services 1 assurant notamment le service de maintien à jour de répertoires. Le serveur 1 est relié par l'intermédiaire d'au moins un réseau de télécommunication à des terminaux 5, 6 d'utilisateurs, et à une base de données 2 dans laquelle sont stockés des profils d'utilisateurs rassemblant l'ensemble des informations nécessaires à la fourniture du service de répertoire. Ce système comprend également un serveur de joignabilité 4 qui dispose d'un accès à l'ensemble des informations déterminant la disponibilité d'un utilisateur enregistré, ces informations étant par exemple rassemblées dans le profil de l'utilisateur dans la base de données 2.

Les serveurs 1 et 4 sont interconnectés par un réseau de transmission de données qui peut être de type privé ou public, par exemple le réseau Internet.

La base de données 2 de profils d'utilisateur contient pour chaque utilisateur enregistré du service de répertoire au moins un répertoire de noms et de numéros d'appel de correspondants de l'utilisateur, chaque répertoire comportant une entrée par correspondant associant un identifiant et un numéro d'appel, ainsi qu'un état d'accessibilité et de disponibilité du correspondant.

Sur la figure 2, le serveur de coordination de services 1 comprend un module d'accès 15, un module 16 d'identification et d'authentification, un module 17 de gestion de profils d'abonnés. Le module 15 constitue un point d'accès au serveur de coordination de services 1 et reçoit des demandes de service provenant des utilisateurs, par l'intermédiaire du serveur d'appel 2. A la connexion d'un utilisateur, une demande de service émise au serveur de coordination de services contient des informations concernant l'identité de l'utilisateur comprenant au moins un identifiant, et éventuellement un mot de passe, et des informations concernant le service demandé. Dans le cas présent, ces informations contiennent par exemple le numéro d'appel de l'utilisateur. Le module 16 d'identification et d'authentification est relié au module d'accès et a pour fonction d'identifier et d'authentifier un utilisateur à partir d'une information d'identification et éventuellement un mot de passe ou un numéro de carte SIM (dans le cas de téléphones mobiles). Ce module vérifie l'existence de l'utilisateur et l'authentifie par exemple à l'aide du mot de passe ou du numéro de carte SIM. Le module 16 communique au module d'accès 15 le résultat de l'identification et de l'authentification.
Le module de gestion de profils 17 gère des profils d'utilisateurs stockés dans une ou plusieurs bases de données de profils et notamment la base de données 2. A partir de l'identifiant d'un utilisateur fourni par le module d'accès 15, le gestionnaire de profils 17 interroge la base de données pour obtenir le profil de l'utilisateur correspondant à l'identifiant fourni. Le gestionnaire de profils crée, pour chaque utilisateur, un contexte unique auquel est rattaché :
- une ou plusieurs sessions d'accès, caractérisant la connexion physique de l'utilisateur (PC, téléphone mobile ou fixe, ...) ou l'activation par l'utilisateur du service de répertoire, et
- une ou plusieurs sessions de service, rattachée à une session d'accès et caractérisant le déroulement du traitement d'un service.

Selon l'invention, pour déterminer l'état de disponibilité d'un utilisateur vis-à-vis d'un correspondant, chaque profil d'utilisateur de la base de données 2 contient également un agenda regroupant les rendez-vous de l'utilisateur. Chaque rendez-vous comprend notamment :
- une date de rendez-vous,
- un horaire de début et de fin du rendez-vous, et
- un état de disponibilité (libre ou joignable, occupé, absent, ...) de l'utilisateur pendant le rendez-vous.

Ces informations de rendez-vous peuvent également comprendre l'objet et le lieu du rendez-vous, le lieu du rendez-vous permettant de déterminer par quel terminal 5, 6 l'utilisateur peut être appelé si celui-ci en a déclaré plusieurs dans son profil. L'agenda d'un utilisateur mémorisé dans la base de données 5 peut également comprendre des informations de filtrage dans lesquelles des plages horaires sont associées à des listes de correspondants définis par un identifiant ou un numéro d'appel, chaque liste de correspondants étant associée à un état de disponibilité (joignable ou non joignable). De cette manière, un utilisateur peut définir que dans une certaine plage horaire, il ne souhaite pas être mis en communication avec un correspondant se trouvant dans une liste de correspondants associée à un état non joignable, ou bien il ne souhaite être mis en communication qu'avec un correspondant se trouvant une liste de correspondants associée à un état joignable.

Les répertoires et agendas de chaque utilisateur peuvent également être mis en oeuvre sous la forme de services distincts gérés par des entités distinctes. Dans ce cas, la base de données 5 peut être répartie sur plusieurs serveurs externes distincts.

Pour pouvoir bénéficier du service de répertoire, chaque utilisateur doit s'enregistrer et éventuellement s'abonner auprès du serveur de coordination de services 1 et définir un profil dans lequel il fournit toutes les informations nécessaires au service, ces informations comprenant notamment les informations de répertoire et d'agenda, qui sont stockées dans la base de données 2.

Les utilisateurs du service de répertoire ont également la possibilité d'introduire dans leur profil des règles de filtrage spécifiques, par exemple qu'ils ne sont pas joignables durant un rendez-vous hors du bureau.

Par ailleurs, les terminaux des utilisateurs sont équipés d'une fonction de répertoire permettant de mémoriser des noms et numéros d'appel de correspondants, ainsi qu'une fonction de déclaration d'accessibilité permettant de déclarer auprès du serveur de coordination de services 1 que le terminal est accessible ou non par un réseau, ou est ou non en communication, à chaque changement d'état d'accessibilité du terminal ou à chaque fois qu'une communication est déclenchée ou se termine.
Cette procédure peut également consister à appeler le serveur 1 qui mémorise à la connexion le numéro d'appel du terminal et un état d'accessibilité déterminé par le terminal, selon que l'utilisateur déclenche une procédure de démarrage du terminal ou de connexion au réseau, une procédure d'arrêt du terminal ou de déconnexion, ou une procédure d'établissement ou de fin de communication.

La procédure de déclaration d'accessibilité du terminal peut également être déclenchée automatiquement dans le cas d'un terminal mobile, lorsque le niveau de tension des batteries du terminal atteint un seuil bas prédéfini. On peut également prévoir d'exécuter la procédure de déclaration d'accessibilit'é à chaque passage d'une zone non couverte vers une zone couverte par le réseau correspondant au terminal mobile.

Le terminal 5, 6 susceptible d'être utilisé pour le service de répertoire peut être un téléphone mobile ou tout autre terminal disposant d'un accès à un réseau de radiotéléphonie cellulaire, un terminal muni de moyens de traitement de données et connecté à un réseau terrestre tel qu'un terminal IP relié à un réseau public de transmission de données (par exemple un ordinateur connecté au réseau Internet), et également un téléphone fixe relié à un réseau de téléphonique commuté public. Un terminal IP peut être utilisé avec une application de messagerie électronique instantanée ou de téléphonie IP.
A sa connexion ou mise sous tension, le terminal mobile ou IP exécute une procédure de déclaration d'accessibilité, préalablement installée dans le terminal, soit dans la mémoire du terminal, soit dans la carte SIM, soit dans un module mémoire enfichable dans le terminal. Cette procédure consiste à émettre un message à destination du serveur de coordination de services 1 contenant le numéro d'appel ou l'adresse IP du terminal. Cette procédure peut également consister à appeler le serveur 1 qui mémorise à la connexion le numéro d'appel du terminal.

Dans le cas d'un terminal mobile, la transmission d'un tel message peut être effectuée sous la forme d'un message de données, par exemple de type SMS (Short Message Service) ou USSD (Unstructured Supplemental Service Data) dans le cas d'un réseau GSM, d'un message MMS (Multimedia Messaging Service) dans le cas d'un réseau de type UMTS, ou d'un message transmis par un canal de données selon la norme GPRS (General Packet Radio Service), ou encore d'un message WAP (Wireless Application Protocol).

A l'inverse, lorsque l'utilisateur met hors tension ou déconnecte son terminal, celui-ci exécute au préalable une procédure de déclaration d'accessibilité analogue, au cours de laquelle le terminal est déclaré non accessible au serveur 1. Une telle procédure de déconnexion peut également être déclenchée automatiquement dans le cas d'un terminal mobile, lorsque le niveau de tension des batteries du terminal atteint un seuil bas prédéfini. On peut également prévoir d'exécuter la procédure de déclaration d'accessibilité à chaque passage d'une zone non couverte vers une zone couverte par le réseau correspondant au terminal mobile.

Dans le cas ou le terminal 6 est un téléphone fixe, la procédure de déclaration d'accessibilité peut être effectuée manuellement, pour permettre à l'utilisateur de déclarer qu'il se trouve en mesure de répondre si le téléphone fixe sonne. Cette procédure consiste alors à appeler le serveur de coordination de services 1, en composant un numéro d'appel du serveur 1 prévu à cet effet, ou à l'aide d'une touche du combiné, préprogrammée à cet effet, et à fournir un état d'accessibilité par exemple en appuyant sur des touches prédéfinies du combiné. Cette déclaration peut également être effectuée automatiquement par l'intermédiaire d'une borne 9 reliée au réseau par la même ligne que le téléphone fixe, et disposant de moyens de transmission par radio de courte portée (quelques mètres à quelques dizaines de mètres) par exemple conformes à la norme "Bluetooth". Une telle borne peut également être intégrée dans le téléphone fixe. De son côté, l'utilisateur doit porter des moyens de transmission 8 correspondants, conçus de manière à recevoir un message émis périodiquement par la borne et à transmettre à la borne en réponse un message d'accusé de réception, tant que ces moyens de transmission se trouvent à portée radio de la borne.

Ces moyens de transmission portables se présentent par exemple sous la forme d'un badge ou d'une carte à puce sans contact. Ils peuvent également être intégrés dans le terminal mobile de l'utilisateur.

A la première réception d'un tel message d'accusé de réception, la borne 9 appelle le serveur 1 pour déclarer la présence de l'utilisateur à proximité de son téléphone fixe. Inversement, lorsque la borne ne reçoit plus de messages d'accusé de réception du badge 8, la borne 9 appelle à nouveau le serveur 1 pour déclarer le départ de l'utilisateur.

Lorsqu'un terminal d'utilisateur enregistré est ainsi détecté accessible, c'est-à-dire qu'il permet d'entrer en communication avec l'utilisateur, le serveur de coordination de services 1 crée une session d'accès correspondant au terminal de l'utilisateur, et une session de service, ainsi qu'une session de service de répertoire.

A la réception de chaque message d'accessibilité d'un utilisateur, le serveur de coordination de service 1 met à jour l'état d'accessibilité associé à chaque entrée de répertoire correspondant à l'utilisateur, dans la base de données 2.

Par ailleurs, le serveur de joignabilité 4 scrute les agendas mémorisés dans les profils d'utilisateur de la base de données 2, pour mettre à jour l'état de disponibilité de tous les correspondants de chaque répertoire, en fonction de l'heure courante, de l'identité de l'utilisateur à qui appartient le répertoire, de l'agenda du correspondant et des informations de filtrage associées à cet agenda. A chaque fois qu'un changement d'état de disponibilité est effectué, il en informe le serveur de coordination de services.

Ces mises à jour d'états d'accessibilité et de disponibilité dans les répertoires enregistrés dans la base de données 2 peuvent être effectuées uniquement pour les utilisateurs à l'état accessible, c'est-à-dire les utilisateurs dont une session de service de répertoire est active.

Ainsi, un correspondant figurant dans un répertoire peut être associé à l'un des états suivants :
- disponible,
- non disponible,
- en ligne,
- non connecté, et
- inconnu, lorsque le correspondant n'est pas enregistré auprès du centre de coordination de services 1 ou ne souhaite pas communiquer son état de disponibilité.

A chaque fois qu'un état de disponibilité ou d'accessibilité est mis à jour dans un répertoire de la base de données 2, le serveur de coordination de services 1 émet un message de mise à jour au terminal où est stocké le répertoire correspondant.
Dans ce cas, le message de mise à jour de répertoire comprend un numéro d'entrée de répertoire à mettre à jour associé à un état.
Le message de mise à jour peut également être émis périodiquement vers un utilisateur enregistré si au moins une entrée du répertoire de celui-ci est à mettre à jour. Dans ce cas, le message de mise à jour comprend par exemple le nombre d'entrées de répertoire à mettre à jour, et pour chaque entrée à mettre à jour, un numéro d'entrée associé à un état. Le numéro d'entrée peut être codé sur 7 bits ou davantage selon le nombre d'entrées de répertoire autorisé, et l'état est codé sur 3 bits.

A la réception d'un message de mise à jour, le terminal met à jour dans son répertoire les entrées spécifiées dans le message.

On peut prévoir que le terminal signale à l'utilisateur qu'une mise à jour du répertoire vient d'être effectuée. Cette signalisation peut être effectuée par l'émission d'un signal sonore et/ou par un affichage spécifique sur l'écran d'affichage du terminal. En outre, l'affichage spécifique peut mentionner le nom du correspondant dont l'état d'accessibilité ou de disponibilité est mis à jour, et la valeur de cet état.

Lorsque l'utilisateur accède à la fonction répertoire de son terminal, le terminal affiche les noms figurant dans le répertoire en association avec l'état de disponibilité du correspondant, par exemple sous forme textuelle ou au moyen d'icônes.

Bien entendu, l'utilisateur peut à tout moment désactiver la fonction de répertoire intelligent, ce qui déclenche l'émission d'un message de désactivation au serveur de coordination de services 1 qui à la réception d'un tel message désactive la session de service de répertoire.

Un utilisateur peut également à tout moment émettre un message indiquant au serveur 1 s'il souhaite ou non que son état de disponibilité soit communiqué. A la réception d'un tel message, le serveur 1 met à jour le profil de l'utilisateur dans la base de données 2. De cette manière, si l'utilisateur a indiqué qu'il ne souhaitait pas communiquer son état de disponibilité, il sera à l'état "inconnu" dans tous les répertoires où son nom figure.

Les informations de filtrage mentionnées dans le profil d'un utilisateur peuvent également indiquer que l'utilisateur ne souhaite pas communiquer son état de disponibilité à une liste de correspondants, définie dans le profil, ou que cet état ne soit communiqué qu'à une liste restreinte de correspondants figurant dans une liste du profil.

Dans le cas d'un terminal mobile, tous les messages échangés entre le terminal et le serveur 1 peuvent être transmis sous la forme de messages de type SMS (Short Message Service) ou USSD (Unstructured Supplemental Service Data) dans le cas d'un réseau GSM, de type MMS (Multimedia Messaging Service) dans le cas d'un réseau de type UMTS, ou de messages transmis par un canal de données selon la norme GPRS (General Packet Radio Service), ou encore de messages WAP (Wireless Application Protocol).

Dans le cas d'un terminal de type PC raccordé au réseau Internet, tous les messages échangés entre le terminal et le serveur 1 peuvent être transmis par exemple par messagerie électronique ou conformément à un protocole basé sur le protocole IP.

Dans un mode de réalisation avantageux de l'invention, les utilisateurs peuvent définir dans leurs profils respectifs plusieurs terminaux par lesquels ils peuvent être joignables.

Dans ce cas, un utilisateur enregistré est considéré accessible par le serveur 1 et mentionné comme tel dans les répertoires de la base 2, si au moins un terminal de l'utilisateur est accessible et libre.

Pour donner davantage de souplesse d'utilisation, on peut prévoir de donner la possibilité aux utilisateurs enregistrés de se déclarer disponibles ou non disponibles, indépendamment des règles de disponibilité et des informations d'agenda spécifiées dans leurs profils respectifs. Une telle déclaration est par exemple effectuée en transmettant au serveur de coordination de services 1 un message de déclaration de disponibilité ou de non disponibilité. Dès la réception d'un tel message, le serveur 1 met à jour l'état de disponibilité de l'utilisateur émetteur du message, dans chaque répertoire où il apparaît dans la base de données 2, en fonction des informations de disponibilité contenues dans le message.
Dans une variante plus élaborée, ces messages de déclaration de disponibilité envoyés par les utilisateurs au serveur 1 peuvent inclure une information de durée spécifiant la durée pendant laquelle l'utilisateur se déclare disponible ou non disponible.

Par ailleurs, tel que représenté sur la figure 1, on peut également prévoir la mise en place d'un serveur d'appel 10 connecté d'une part au serveur de coordination de services 1 et d'autre part aux réseaux 3, vers lequel sont redirigés tous les appels destinés à un utilisateur enregistré. Le serveur d'appel est conçu pour diriger ensuite ces appels vers un terminal de l'utilisateur, qui est à l'état accessible et libre, indépendamment du numéro d'appel composé par l'utilisateur appelant.

Dans ce cas, on peut prévoir qu'en sélectionnant un correspondant disponible dans un répertoire de son terminal, le terminal, via le serveur d'appel 2 et le serveur de coordination de services 1, établit une communication avec le terminal accessible et libre du correspondant.

En outre, si plusieurs terminaux d'un utilisateur sont accessibles et libres à un moment donné, le serveur d'appel, par l'intermédiaire du serveur 1, sélectionne un terminal vers lequel il dirige les appels destinés à l'utilisateur, en fonction d'un ordre de priorité défini par l'utilisateur dans son profil.

## Revendications

1. Procédé pour la fourniture d'un service de répertoire à un utilisateur dans un système de télécommunication comprenant au moins un réseau (3) de télécommunication ou de transmission de données numériques, chaque utilisateur étant équipé d'au moins un terminal (5, 6) de télécommunication susceptible d'être connecté à l'un des réseaux et muni d'une fonction de répertoire,
**caractérisé en ce qu'**il comprend les étapes consistant à :
- introduire dans une base de données (2) un profil d'utilisateur pour chaque utilisateur enregistré, comprenant un répertoire et des données d'agenda et/ou de filtrage définissant des plages horaires de disponibilité associées chacune à au moins une liste de correspondants autorisés ou non à appeler l'utilisateur durant la plage horaire,
- déterminer et maintenir à jour dans chaque répertoire de la base de données un état d'accessibilité de chaque terminal (5, 6) d'utilisateur enregistré figurant dans le répertoire, selon que l'utilisateur enregistré est accessible ou non par un réseau par l'intermédiaire du terminal,
- déterminer et maintenir à jour dans chaque répertoire de la base de données un état de disponibilité de chaque correspondant enregistré figurant dans le répertoire, en fonction de l'heure courante, de l'identité de l'utilisateur à qui appartient le répertoire, de l'agenda du correspondant et d'informations de filtrage associées à cet agenda,
- émettre à chaque mise à jour du répertoire d'un utilisateur enregistré, un message de mise à jour au terminal d'utilisateur où est stocké le répertoire correspondant, et
- à la réception d'un message de mise à jour de répertoire par un terminal d'utilisateur enregistré, mettre à jour un état d'accessibilité et de disponibilité associé à chaque correspondant figurant dans le répertoire en fonction des informations contenues dans le message reçu.

2. Procédé selon la revendication 1,
**caractérisé en ce qu'**il comprend en outre des étapes consistant pour chaque terminal (5, 6) d'utilisateur enregistré à émettre des messages d'accessibilité contenant l'état d'accessibilité du terminal à chaque fois que le terminal se connecte et se déconnecte du réseau (3).

3. Procédé selon la revendication 1 ou 2,
**caractérisé en ce que** chaque correspondant dans un répertoire de la base de données ou mémorisé dans un terminal (5, 6) d'utilisateur enregistré est associé à un état d'accessibilité et de disponibilité pouvant prendre l'une des valeurs suivantes :
- disponible lorsque le terminal du correspondant est à l'état accessible et que le correspondant est disponible pour recevoir un appel de l'utilisateur,
- non disponible lorsque le terminal du correspondant est à l'état accessible mais que le correspondant n'est pas disponible pour recevoir un appel de l'utilisateur,
- en ligne ou occupé lorsque le terminal du correspondant est en cours de communication,
- non connecté lorsque le terminal du correspondant n'est pas connecté, et
- inconnu, lorsque le correspondant n'est pas enregistré auprès du centre de coordination de services 1.

4. Procédé selon l'une des revendications 1 à 3,
**caractérisé en ce qu'**il comprend une étape de signalement sur le terminal (5, 6) d'un utilisateur enregistré de la réception d'un message de mise à jour de répertoire.

5. Procédé selon la revendication 4,
**caractérisé en ce que** chaque profil d'utilisateur mémorisé dans la base de données (2) comprend une zone dans laquelle l'utilisateur peut spécifier une liste de correspondants à qui l'état d'accessibilité et de disponibilité de l'utilisateur peut ou ne doit pas être communiqué, l'état d'accessibilité et de disponibilité d'un correspondant ne souhaitant pas communiquer son état de disponibilité prenant la valeur "inconnu".

6. Procédé selon l'une des revendications 1 à 5,
**caractérisé en ce que** les utilisateurs enregistrés peuvent introduire dans leur profil plusieurs numéros ou adresses d'accès de terminaux par lesquels ils peuvent être joignables, un utilisateur enregistré étant considéré accessible dans les répertoires de la base de données (2) où il apparaît, si au moins un terminal (5, 6) spécifié dans le profil de l'utilisateur est accessible.

7. Procédé selon l'une des revendications 1 à 6,
**caractérisé en ce qu'**il comprend en outre des étapes consistant à émettre par un utilisateur enregistré un message de déclaration de disponibilité dans lequel l'utilisateur se déclare disponible ou non disponible, indépendamment des données d'agenda et/ou de filtrage spécifiées dans son profil, et à la réception d'un tel message, à mettre à jour l'état de disponibilité de l'utilisateur émetteur du message dans chaque répertoire où il apparaît dans la base de données (2), en fonction des informations de disponibilité contenues dans le message.

8. Système pour la fourniture d'un service de répertoire à un utilisateur dans un système de télécommunication comprenant au moins un réseau (3) de télécommunication ou de transmission de données numériques, chaque utilisateur étant équipé d'au moins un terminal (5, 6) de télécommunication susceptible d'être connecté à l'un des réseaux et muni d'une fonction de répertoire,
**caractérisé en ce qu'**il comprend :
- une base de données (2) de profils d'utilisateurs enregistrés, comprenant pour chaque utilisateur un répertoire et des données d'agenda et/ou de filtrage définissant des plages horaires de disponibilité associées chacune à au moins une liste de correspondants autorisés ou non à appeler l'utilisateur durant la plage horaire,
- des moyens (1) pour déterminer et maintenir à jour dans chaque répertoire de la base de données un état d'accessibilité de chaque terminal (5, 6) d'utilisateur enregistré figurant dans le répertoire, selon que l'utilisateur enregistré est accessible ou non par un réseau par l'intermédiaire du terminal,
- des moyens (4) pour déterminer et maintenir à jour dans chaque répertoire de la base de données un état de disponibilité de chaque correspondant enregistré figurant dans le répertoire, en fonction de l'heure courante, de l'identité de l'utilisateur à qui appartient le répertoire, de l'agenda du correspondant et d'informations de filtrage associées à cet agenda,
- des moyens (1) pour émettre par le réseau à chaque mise à jour du répertoire d'un utilisateur enregistré, un message de mise à jour au terminal d'utilisateur où est stocké le répertoire correspondant, et
- sur chaque terminal (5, 6) d'utilisateur enregistré, des moyens de réception pour recevoir des messages de mise à jour de répertoire, et des moyens pour mettre à jour un état d'accessibilité et de disponibilité associé à chaque correspondant figurant dans le répertoire en fonction des informations contenues dans le message reçu.

9. Système selon la revendication 8,
**caractérisé en ce que** chaque terminal (5, 6) d'utilisateur enregistré est associé à des moyens pour émettre un message d'accessibilité vers les moyens de mise à jour de l'état d'accessibilité de chaque utilisateur, à chaque fois que l'utilisateur passe d'un état dans lequel il se trouve en mesure de recevoir des appels par le terminal, vers un état dans lequel il ne se trouve plus en mesure de recevoir des appels par le terminal, et inversement.

10. Système selon la revendication 8 ou 9,
**caractérisé en ce que** dans le cas où le terminal (6) de l'utilisateur enregistré est un téléphone fixe, il comprend des moyens (8, 9) pour détecter la présence ou l'absence de l'utilisateur à proximité du téléphone fixe, et des moyens (9) pour transmettre vers les moyens de mise à jour de l'état d'accessibilité de l'utilisateur, un message d'accessibilité du téléphone fixe à chaque changement d'état de présence de l'utilisateur à proximité du téléphone fixe.

11. Système selon l'une des revendications 8 à 10,
**caractérisé en ce que** dans le cas où le terminal (5) de l'utilisateur est un téléphone mobile, il comprend un programme qui est chargé dans la mémoire du téléphone mobile et qui est exécuté à la mise sous tension du téléphone mobile si celui-ci se trouve dans une zone couverte par un réseau (3) de téléphonie cellulaire correspondant, ou à la mise hors tension du téléphone mobile, pour déclencher l'émission vers les moyens de mise à jour de l'état d'accessibilité de l'utilisateur, d'un message d'accessibilité du téléphone mobile pour déclarer celui-ci respectivement accessible, ou non accessible.

12. Système selon la revendication 8 ou 11,
**caractérisé en ce que** dans le cas où le terminal (6) de l'utilisateur est un terminal muni de moyens de traitement de données et connecté à un réseau terrestre (3), il comprend un programme qui est chargé dans la mémoire du terminal et qui est exécuté à la mise sous tension du terminal, ou à la mise hors tension du terminal, pour déclencher l'émission vers les moyens de mise à jour de l'état d'accessibilité de l'utilisateur, d'un message d'accessibilité du terminal pour déclarer celui-ci respectivement accessible, ou non accessible.

13. Système selon l'une des revendications 8 à 12,
**caractérisé en ce que** chaque profil d'utilisateur dans la base de données (2) comprend une zone mémoire dans laquelle les utilisateurs enregistrés peuvent introduire plusieurs numéros ou adresses d'accès de terminaux par lesquels ils peuvent être joignables, un utilisateur enregistré étant considéré accessible dans les répertoires de la base de données où il apparaît, si au moins un terminal spécifié dans le profil de l'utilisateur est accessible.

## Patentansprüche

1. Verfahren zur Versorgung eines Nutzer mit einem Registerdienst in einem Telekommunikationssystem, das wenigstens ein Telekommunikations- oder digitales Datenübertragungsnetz (3) aufweist, wobei jeder Nutzer mit wenigstens einem Telekommunikationsanschluss (5, 6) ausgestattet ist, der mit einem der Netze verbunden werden kann und mit einer Registerfunktion versehen ist,
**dadurch gekennzeichnet, dass** es die Schritte umfasst, bestehend aus:
- Eingeben eines Nutzerprofils für jeden registrierten Nutzer in eine Datenbank (2), umfassend ein Register und Termin- und/oder Filterdaten, die Verfügbarkeitszeiten definieren, die jeweils wenigstens einer Liste von Gesprächspartnern zugeordnet sind, die den Nutzer während des Zeitraumes anrufen dürfen oder nicht,
- Festlegen und Aktualisieren eines Erreichbarkeitszustandes jedes Anschlusses (5, 6) eines in das Register eingetragenen, registrierten Nutzers in jedem Register der Datenbank, je nachdem, ob der registrierte Nutzer mit Hilfe des Anschlusses durch ein Netz erreichbar ist oder nicht,
- Festlegen oder Aktualisieren eines Verfügbarkeitszustandes jedes in das Register eingetragenen, registrierten Gesprächspartners in jedem Register der Datenbank, in Abhängigkeit von der aktuellen Zeit, der Identität des Nutzers, dem das Register gehört, dem Termin des Gesprächspartners und von mit diesem Termin verbundenen Filterinformationen,
- Senden bei jeder Aktualisierung des Registers eines registrierten Nutzers einer Aktualisierungsmitteilung an den Anschluss des Nutzers, wo das entsprechende Register gespeichert ist, und
- beim Empfang einer Aktualisierungsmitteilung des Registers durch einen Anschluss eines registrierten Nutzers, Aktualisieren eines Erreichbarkeits- und Verfügbarkeitszustandes, der jedem in das Register eingetragenen Gesprächspartner zugeordnet ist, in Abhängigkeit von in der empfangenen Mitteilung enthaltener Informationen.

2. Verfahren nach Anspruch 1,
**dadurch gekennzeichnet, dass** dieses ferner Schritte umfasst, die für jeden Anschluss (5, 6) eines registrierten Nutzers darin bestehen, die Erreichbarkeitsmitteilungen, die den Erreichbarkeitszustand des Anschlusses enthalten, jedes Mal zu senden, wenn sich der Anschluss mit dem Netz (3) verbindet und von diesem trennt.

3. Verfahren nach Anspruch 1 oder 2,
**dadurch gekennzeichnet, dass** jeder Gesprächspartner in einem Register der Datenbank, oder in einem Anschluss (5, 6) eines registrierten Nutzers gespeichert, einem Erreichbarkeits- und Verfügbarkeitszustand zugeordnet wird, der einen der folgenden Werte annehmen kann:
- verfügbar, wenn sich der Anschluss des Gesprächspartners in einem Erreichbarkeitszustand befindet und der Gesprächspartner verfügbar ist, um einen Anruf des Nutzers zu erhalten,
- nichts verfügbar, wenn sich der Anschluss des Gesprächspartners in einem Erreichbarkeitszustand befindet, der Gesprächspartner aber nicht verfügbar ist, um einen Anruf des Nutzers zu erhalten,
- auf Leitung oder besetzt, wenn sich der Anschluss des Gesprächspartners gerade in Kommunikation befindet,
- nicht angeschlossen, wenn der Anschluss des Gesprächspartners nicht angeschlossen, und
- unbekannt, wenn der Gesprächspartner nicht bei dem Dienst-Koordinationszentrum 1 registriert ist.

4. Verfahren nach einem der Ansprüche 1 bis 3,
**dadurch gekennzeichnet, dass** dieses einen Signalisierungsschritt am Anschluss (5, 6) eines registrierten Nutzers beim Empfang einer Aktualisierungsmitteilung des Registers umfasst.

5. Verfahren nach Anspruch 4,
**dadurch gekennzeichnet, dass** jedes in der Datenbank (2) gespeicherte Nutzerprofil einen Bereich aufweist, in welchem der Nutzer eine Liste von Gesprächspartnern angeben kann, an welche der Zustand der Erreichbarkeit und Verfügbarkeit des Nutzers weiter gegeben werden kann oder nicht weiter gegeben werden soll, wobei der Zustand der Erreichbarkeit und Verfügbarkeit eines Gesprächspartners, dem man seinen Verfügbarkeitszustand nicht bekannt geben möchte, den Wert "unbekannt" erhält.

6. Verfahren nach einem der Ansprüche 1 bis 5,
**dadurch gekennzeichnet, dass** die registrierten Nutzer in ihr Profil mehrere Zugangsnummern oder -adressen von Anschlüssen eingeben können, durch welche sie erreichbar sein können, wobei ein registrierter Nutzer als in den Registern der Datenbank (2), in welchen er erscheint, als erreichbar angesehen wird, wenn wenigstens ein in dem Profil des Nutzers angegebener Anschluss (5, 6) erreichbar ist.

7. Verfahren nach einem der Ansprüche 1 bis 6,
**dadurch gekennzeichnet, dass** dieses ferner Schritte umfasst, die darin bestehen, durch einen registrierten Nutzer eine Mitteilung zur Verfügbarkeitserklärung sendet, in welcher sich der Nutzer verfügbar oder nicht verfügbar erklärt, unabhängig von in seinem Profil angegebener Termin- oder Filterdaten, und bei Erhalt einer solchen Mitteilung der Verfügbarkeitszustand des die Mitteilung sendenden Nutzers in jedem Register, in welchem dieser in der Datenbank (2) erscheint, in Abhängigkeit von den in der Mitteilung enthaltenen Verfügbarkeitsinformationen zu aktualisieren.

8. System zur Versorgung eines Benutzer mit einem Registerdienst in einem Telekommunikationssystem, das wenigstens ein Telekommunikations- oder digitales Datenübertragungsnetz (3) aufweist, wobei jeder Nutzer mit wenigstens einem Telekommunikationsanschluss (5, 6) ausgestattet ist, der mit einem der Netze verbunden werden kann und mit einer Registerfunktion versehen ist,
**dadurch gekennzeichnet, dass** dieses umfasst:
- eine Datenbank (2) von registrierten Nutzerprofilen, umfassend ein Register und Termin- und/oder Filterdaten, die Verfügbarkeitszeiten definieren, die jeweils wenigstens einer Liste von Gesprächspartnern zugeordnet sind, die den Nutzer während des Zeitraumes anrufen dürfen oder nicht,
- eine Einrichtung (1) zum Festlegen und Aktualisieren in jedem Register der Datenbank eines Erreichbarkeitszustandes jedes Anschlusses (5, 6) eines in das Register eingetragenen, registrierten Nutzers, je nachdem, ob der registrierte Nutzer mit Hilfe des Anschlusses durch ein Netz erreichbar ist oder nicht,
- eine Einrichtung (4), um in jedem Register der Datenbank einen Verfügbarkeitszustand jedes Anschlusses (5, 6) des in das Register eingetragenen, registrierten Nutzers in Abhängigkeit von der aktuellen Zeit, der Identität des Nutzers, dem das Register gehört, dem Termin des Gesprächspartners und von mit diesem Termin verbundenen Filterinformationen festzulegen oder zu aktualisieren,
- eine Einrichtung (1), um durch das Netz bei jeder Aktualisierung des Registers eines registrierten Nutzers eine Aktualisierungsmitteilung an den Anschluss des Nutzers zu senden, wo das entsprechende Register gespeichert ist, und
- an jedem Anschluss (5, 6) eines registrierten Nutzers Empfangsmittel, um Aktualisierungsmitteilungen des Registers zu empfangen, und Mittel zum Aktualisieren eines Erreichbarkeits- und Verfügbarkeitszustandes, der jedem in das Register eingetragenen Gesprächspartner zugeordnet ist, in Abhängigkeit von in der empfangenen Mitteilung enthaltener Informationen zu aktualisieren.

9. System nach Anspruch 8,
**dadurch gekennzeichnet, dass** jeder Anschluss (5, 6) eines registrierten Nutzers verbunden ist mit Mitteln zum Senden einer Erreichbarkeitsmitteilung an die Aktualisierungsmittel des Erreichbarkeitszustandes jedes Nutzers, jedes Mal dann, wenn der Nutzer von einem Zustand, in welchem er bereit ist, Anrufe über den Anschluss zu erhalten, zu einem Zustand übergeht, in welchem dieser nicht mehr bereit ist, über den Anschluss Anrufe anzunehmen, und umgekehrt.

10. System nach Anspruch 8 oder 9,
**dadurch gekennzeichnet, dass** in dem Fall, in welchem der Anschluss (6) des registrierten Nutzers ein Festnetztelefon ist, dieses umfasst Einrichtungen (8, 9), um das Vorhandensein oder das Nicht-Vorhandensein eines Nutzers in der Nähe des Festnetztelefons zu erfassen, und Mittel (9), um an die Einrichtung zur Aktualisierung des Erreichbarkeitszustandes des Nutzers eine Erreichbarkeitsmitteilung des Festnetztelefons bei jeder Änderung des Präsenzzustandes des Nutzers in der Nähe des Festnetztelefons zu übertragen.

11. System nach einem der Ansprüche 8 bis 10,
**dadurch gekennzeichnet, dass** in dem Fall, in welchem der Anschluss (5) des Nutzers ein Mobiltelefon ist, dieses ein Programm umfasst, das in den Speicher des Mobiltelefons geladen ist und das ausgeführt wird beim Einschalten des Mobiltelefons, wenn sich dieses in einer durch ein entsprechendes Mobilfunknetz (3) abgedeckten Zone befindet, oder beim Ausschalten des Mobiltelefons, um die Sendung einer Erreichbarkeitsmitteilung des Mobiltelefons an die Einrichtung zur Aktualisierung des Erreichbarkeitszustandes des Nutzers auszulösen, um diesen jeweils erreichbar oder nicht-erreichbar zu erklären.

12. System nach Anspruch 8 oder 11,
**dadurch gekennzeichnet, dass** in dem Falle, in welchem der Anschluss (6) des Nutzers ein Anschluss ist, der mit Datenbehandlungsmitteln versehen ist und mit einem Festnetz (3) verbunden ist, dieses umfasst ein Programm, das in den Speicher des Anschlusses geladen ist und das bei der Einschaltung des Anschlusses oder bei der Ausschaltung des Anschlusses ausgeführt wird, um die Sendung einer Mitteilung zur Erreichbarkeit des Anschlusses an die Aktualisierungseinrichtung des Erreichbarkeitszustandes des Nutzes auszulösen, um diesen jeweils erreichbar oder nicht-erreichbar zu erklären.

13. System nach einem der Ansprüche 8 bis 12,
**dadurch gekennzeichnet, dass** jedes Nutzerprofil in der Datenbank (2) eine Speicherbereich aufweist, in welchem die registrierten Benutzer mehrere Zugangsnummern oder -adressen der Anschlüsse eingeben können, durch welche sie erreichbar werden können, wobei ein registrierter Nutzer als in den Registern der Datenbank, in denen er erscheint, erreichbar angesehen wird, wenn wenigstens ein in dem Profil des Nutzers angegebener Anschluss erreichbar ist.

## Claims

1. Method of providing a directory service to a user in a telecommunication system comprising at least one telecommunication or digital data transmission network (3), each user being equipped with at least one telecommunication terminal (5, 6) able to be connected to one of the networks and furnished with a directory function,
**characterized in that** it comprises the steps consisting in:
- introducing into a database (2) a user profile for each registered user, comprising a directory and agenda and/or filtering data defining availability time slots each associated with at least one list of parties authorized or otherwise to call the user during the time slot,
- determining and updating in each directory of the database a state of accessibility of each registered user terminal (5, 6) featuring in the directory, depending on whether the registered user is or is not accessible via a network by way of the terminal,
- determining and updating in each directory of the database a state of availability of each registered party featuring in the directory, as a function of the current time, of the identity of the user to whom the directory belongs, of the agenda of the party and of filtering information associated with this agenda,
- issuing, at each update of the directory of a registered user, an update message to the user terminal where the corresponding directory is stored, and
- on receipt of a directory update message by a registered user terminal, updating a state of accessibility and of availability associated with each party featuring in the directory as a function of the information contained in the message received.

2. Method according to Claim 1,
**characterized in that** it furthermore comprises steps consisting for each registered user terminal (5, 6) in issuing accessibility messages containing the state of accessibility of the terminal each time that the terminal connects to and disconnects from the network (3).

3. Method according to Claim 1 or 2,
**characterized in that** each party in a directory of the database or stored in a registered user terminal (5, 6) is associated with a state of accessibility and of availability that can take one of the following values:
- available when the terminal of the party is in the accessible state and when the party is available to receive a call from the user,
- unavailable when the terminal of the party is in the accessible state but the party is not available to receive a call from the user,
- on line or busy when the terminal of the party is currently communicating,
- nonconnected when the terminal of the party is not connected, and
- unknown, when the party is not registered with the services coordination centre (1).

4. Method according to one of Claims 1 to 3,
**characterized in that** it comprises a step of signalling on the terminal (5, 6) of a registered user of the receipt of a directory update message.

5. Method according to Claim 4,
**characterized in that** each user profile stored in the database (2) comprises an area in which the user can specify a list of parties to whom the state of accessibility and of availability of the user may or must not be communicated, the state of accessibility and of availability of a party not wishing to communicate his state of availability taking the value "unknown".

6. Method according to one of Claims 1 to 5,
**characterized in that** the registered users can introduce into their profile several numbers or addresses for accessing terminals via which they may be contactable, a registered user being considered to be accessible in the directories of the database (2) where he appears, if at least one terminal (5, 6) specified in the profile of the user is accessible.

7. Method according to one of Claims 1 to 6,
**characterized in that** it furthermore comprises steps consisting in issuing by a registered user an availability declaration message in which the user declares himself available or unavailable, independently of the agenda and/or filtering data specified in his profile, and, on receipt of such a message, in updating the state of availability of the user issuing the message in each directory where he appears in the database (2), as a function of the availability information contained in the message.

8. System of providing a directory service to a user in a telecommunication system comprising at least one telecommunication or digital data transmission network (3), each user being equipped with at least one telecommunication terminal (5, 6) able to be connected to one of the networks and furnished with a directory function,
**characterized in that** it comprises:
- a database (2) of registered user profiles, comprising for each user a directory and agenda and/or filtering data defining availability time slots each associated with at least one list of parties authorized or otherwise to call the user during the time slot,
- means (1) for determining and updating in each directory of the database a state of accessibility of each registered user terminal (5, 6) featuring in the directory, depending on whether the registered user is or is not accessible via a network by way of the terminal,
- means (4) for determining and updating in each directory of the database a state of availability of each registered party featuring in the directory, as a function of the current time, of the identity of the user to whom the directory belongs, of the agenda of the party and of filtering information associated with this agenda,
- means (1) for issuing via the network at each update of the directory of a registered user, an update message to the user terminal where the corresponding directory is stored, and
- on each registered user terminal (5, 6), means of reception for receiving directory update messages, and means for updating a state of accessibility and of availability associated with each party featuring in the directory as a function of the information contained in the message received.

9. System according to Claim 8,
**characterized in that** each registered user terminal (5, 6) is associated with means for issuing an accessibility message to the means for updating the state of accessibility of each user, each time that the user switches from a state in which he is able to receive calls via the terminal, to a state in which he is no longer able to receive calls via the terminal, and vice versa.

10. System according to Claim 8 or 9,
**characterized in that** in the case where the terminal (6) of the registered user is a fixed telephone, it comprises means (8, 9) for detecting the presence or the absence of the user in proximity to the fixed telephone, and means (9) for transmitting to the means for updating the state of accessibility of the user, a message of accessibility of the fixed telephone with each change of state of presence of the user in proximity to the fixed telephone.

11. System according to one of Claims 8 to 10,
**characterized in that** in the case where the terminal (5) of the user is a mobile telephone, it comprises a programme which is loaded into the memory of the mobile telephone and which is executed on powex-up of the mobile telephone if the latter is in an area covered by a corresponding cellular telephone network (3), or on power-down of the mobile telephone, so as to trigger the issuing to the means of updating of the state of accessibility of the user, of a message of accessibility of the mobile terminal so as to declare the latter respectively accessible, or not accessible.

12. System according to Claim 8 or 11,
**characterized in that** in the case where the terminal (6) of the user is a terminal furnished with data processing means and connected to a land network (3), it comprises a programme which is loaded into the memory of the terminal and which is executed on power-up of the terminal, or on power-down of the terminal, so as to trigger the issuing to the means of updating of the state of accessibility of the user, of a message of accessibility of the terminal so as to declare the latter respectively accessible, or not accessible.

13. System according to one of Claims 8 to 12,
**characterized in that** each user profile in the database (2) comprises a memory area into which the registered users may introduce several numbers or addresses for accessing terminals via which they may be contactable, a registered user being considered to be accessible in the directories of the database where he appears, if at least one terminal specified in the profile of the user is accessible.
